# FASCICULE DE BREVET EUROPEEN

(11) **EP 3 775 583 B1**
(45) Date de publication et mention de la délivrance du brevet: **04.05.2022**
(21) Numéro de dépôt: 19721090.9
(22) Date de dépôt: 26.03.2019
(51) Int. Cl.: F16B 21/08, G01M 17/02

(54) **SYSTÈME DE FIXATION POUR BOITIER DE MESURE DE CARACTÉRISTIQUES DE PNEUMATIQUE**
BEFESTIGUNGSSYSTEM FÜR BOX ZUR MESSUNG DER EIGENSCHAFTEN EINES REIFENS
ATTACHMENT SYSTEM FOR BOX FOR MEASURING CHARACTERISTICS OF A TYRE

(30) Priorité: 30.03.2018 FR 1870370
(43) Date de publication de la demande: 17.02.2021
(73) Titulaire: Compagnie Générale des Etablissements Michelin, 63000 Clermont-Ferrand (FR)
(72) Inventeur: LEROY, Vianney, 63040 Clermont-Ferrand Cedex 09 (FR); MARTIN, Denis, 63040 Clermont-Ferrand Cedex 09 (FR)
(74) Mandataire: Roussy, Delphine
(86) Numéro de dépôt international: PCT/IB2019/052466
(87) Numéro de publication internationale: WO 2019/186409

(56) Documents cités:
- WO-A1-2014/202747
- DE-A1-102009 013 949
- DE-U1- 8 321 845
- DE-U1-202006 010 426
- JP-B2- 6 249 911

## Description

### DOMAINE TECHNIQUE DE L'INVENTION

La présente invention concerne un système de fixation au sol pour un boitier de mesure. Elle concerne plus particulièrement un système de fixation pour dispositif de mesure dans un tel boitier. Dans une application préférentielle, la présence invention concerne un système de fixation pour capteur magnétique dans un boitier de mesure de caractéristiques de pneumatique.

### ETAT DE LA TECHNIQUE ANTERIEURE

Le document WO 2014202747 décrit un système de mesure de l'épaisseur d'une couche de matériau caoutchouteux d'un pneumatique. Il prend la forme d'un boitier à fixer au sol. En utilisation, ce type de boitier est soumis à de fortes contraintes du fait de nombreux passages de véhicules de tous types, y compris des poids lourds. Malgré ces fortes contraintes, le boîtier ne doit pas se déplacer ou se soulever. Les boîtiers sont donc souvent fixés au sol grâce à des aménagements importants effectués dans le sol. Ces aménagements impliquent d'importants travaux, longs et coûteux. Par ailleurs, si jamais un boîtier s'avère être mal positionné, tout déplacement nécessite également d'importants travaux, avec des équipements lourds. Il existe donc un besoin pour permettre de fixer et repositionner facilement les boîtiers de mesure, avec une mise en oeuvre simplifiée.

Le document FR3007517 décrit un système de mesure de l'épaisseur d'une couche de gomme de pneumatique. Ce système utilise une source de champ magnétique statique et un élément de mesure du champ magnétique. Un tel système est prévu pour mise en place dans un boîtier sur lequel les véhicules roulent. Les mesures sont prises au moment du passage des roues sur le boîtier.

Le document JP 6249911 B décrit un anneau de support pour un capteur.

Le boitier doit pouvoir résister à des charges importantes. Les contraintes de charge sont liées à la quantité de véhicules roulant sur le boitier et à leur poids. Par ailleurs, des dysfonctionnements des différents éléments électroniques peuvent être provoqués notamment par des vibrations lors du passage des véhicules.

Pour pallier ces différents inconvénients, l'invention prévoit différents moyens techniques.

### EXPOSE DE L'INVENTION

Tout d'abord un premier objectif de l'invention consiste à prévoir un système de fixation pour dispositif électronique, par exemple un capteur magnétique, dans un boîtier de mesure, par exemple de caractéristique de pneumatiques, qui permette un assemblage des éléments constituants sans jeu, ni risque de vibration.

Un autre objectif de l'invention consiste à prévoir un système de fixation pour boîtier de mesure de caractéristique de pneumatiques simple et rapide à implanter dans le sol.

Un autre objectif de l'invention consiste à prévoir un système de fixation économique et facilement industrialisable.

Un autre objectif de l'invention consiste à prévoir un système de fixation ne perturbant pas le fonctionnement du boîtier de mesure.

Pour ce faire, l'invention prévoit un système de fixation pour dispositif électronique tel qu'un capteur magnétique comprenant un aimant annulaire et un circuit électronique de lecture d'un champ magnétique susceptible d'être généré par ledit aimant, pour fixation dans un boitier de mesure, comprenant :
- un support de dispositif électronique conçu pour loger un dispositif électronique de mesure;
- une bague de précontrainte apte à coopérer avec ledit support pour assemblage et comprenant une pluralité de poutres de précontrainte agencées pour appuyer sur ledit dispositif électronique lorsque ladite bague est assemblée avec le support, ledit dispositif électronique étant inséré dans ledit support, dans lequel la bague de précontrainte comporte un corps annulaire portant une pluralité de poutres périphériques réparties circonférentiellement sur le pourtour dudit corps annulaire, lesdites poutres périphériques étant agencées pour appuyer contre ledit aimant annulaire du capteur magnétique de mesure, lorsque ce dernier est logé dans le support et que la bague est assemblée avec ledit support..

La solution permet de fixer sans jeu les éléments de mesure afin d'assurer la bonne qualité de mesure. La fixation est par ailleurs durable. La solution est simple et facile à industrialiser. Elle comporte peu de pièces. Le montage et les manipulations d'installation sont simples. Le coût global est très avantageux.

De manière avantageuse, la bague de précontrainte comporte une poutre diamétrale agencée pour appuyer contre ledit circuit électronique lorsque ce dernier est logé dans le support et que la bague est assemblée avec ledit support.

Pour réaliser la fixation sans jeu, on applique une précharge qui maintient les éléments en contact sur leurs surfaces de référence. Pour réaliser cette précharge à moindre coût, on utilise l'élasticité des matériaux. Une poutre mécanique sollicitée en flexion a un effet ressort et ainsi applique une précharge sur les éléments. La poutre doit appliquer un effort suffisamment important pour qu'en cas de choc, l'inertie des éléments n'applique pas une force supérieure à celle de la poutre. On s'assure également lors du dimensionnement que la poutre reste dans son domaine élastique pour garder cet « effet ressort ». Le jeu est ainsi pratiquement nul et permet de garantir une mesure de qualité.

Selon un mode de réalisation avantageux, le support comporte au moins une arche périphérique pourvue d'une ouverture d'arche.

Selon un autre mode de réalisation avantageux, la bague comporte au moins un doigt d'arrimage apte à coopérer avec ladite ouverture d'arche pour arrimer la bague avec le support avec une précontrainte des poutres en appui contre le capteur magnétique lorsque ce dernier est logé dans le support.

L'assemblage de la bague dans le support peut donc être effectué de façon très simple. En appuyant sur la bague, les poutres sont précontraintes. L'assemblage permet de garder cette précontrainte.

De manière avantageuse, les poutres sont déformables élastiquement.

L'assemblage du système de fixation avec déformation des poutres permet de générer un effort de serrage contre le capteur magnétique logé dans le système de fixation.

L'invention prévoit également un boîtier de mesure de caractéristiques de pneumatique, comprenant :
(i) au moins un capteur magnétique pourvu d'un aimant circonférentiel et d'un circuit électronique de lecture d'un champ magnétique susceptible d'être généré par ledit aimant;
(ii) au moins un système de fixation tel que préalablement décrit ;
(iii) au moins une cavité pour loger un capteur lorsque ce dernier est assemblé sous précontrainte dans un système de fixation ;
(iv) un couvercle de boitier, refermant la cavité.

De manière avantageuse, le boitier comprend par ailleurs au moins un disque insérable dans le corps de la bague, ledit disque portant un doigt d'appui, s'étendant perpendiculairement au plan du disque et adapté pour appuyer sur la poutre diamétrale lorsque ledit couvercle de boîtier est refermé.

**Ces** caractéristiques permettent de créer un système de fixation très simple, peu coûteux et robuste, avec une mise en place des capteurs rapide et fonctionnelle.

### DESCRIPTION DES FIGURES

Tous les détails de réalisation sont donnés dans la description qui suit, complétée par les figures 1 à 7b, présentées uniquement à des fins d'exemples non limitatifs, et dans lesquelles :
- la figure 1 est une vue en perspective d'un exemple du boitier de mesure de caractéristiques de pneumatique ;
- la figure 2 est une vue en perspective rapprochée du boîtier de la figure 1 ;
- la figure 3a est une vue en perspective d'un exemple de capteur magnétique à différentes étapes d'assemblage dans un boîtier de mesure ;
- la figure 3b est une vue en perspective d'un exemple de circuit électronique d'un capteur ;
- la figure 3c est une vue en perspective d'un exemple d'aimant de capteur ;
- la figure 4 est une vue en perspective d'un exemple de support de capteur magnétique ;
- la figure 5a est une vue de dessus d'un exemple de bague de précontrainte ;
- la figure 5b est une vue en élévation de la bague de la figure 5a ;
- la figure 6a est une vue de dessus d'un exemple d'assemblage d'une bague de précontrainte à un support ;
- la figure 6b est une vue en élévation du support et de la bague de la figure 6a ;
- la figure 6c est une vue en élévation du support et de la bague de la figure 6a présenté sous un autre angle ;
- la figure 7a est une vue en élévation d'un exemple de capteur complètement assemblé dans un boîtier de mesure ;
- la figure 7b est une vue du capteur assemblé de la figure 7a, sous un autre angle de vue.

### DESCRIPTION DETAILLEE DE L'INVENTION

### BOITIER DE MESURES DE CARACTERISTIQUES DE PNEUMATIQUES

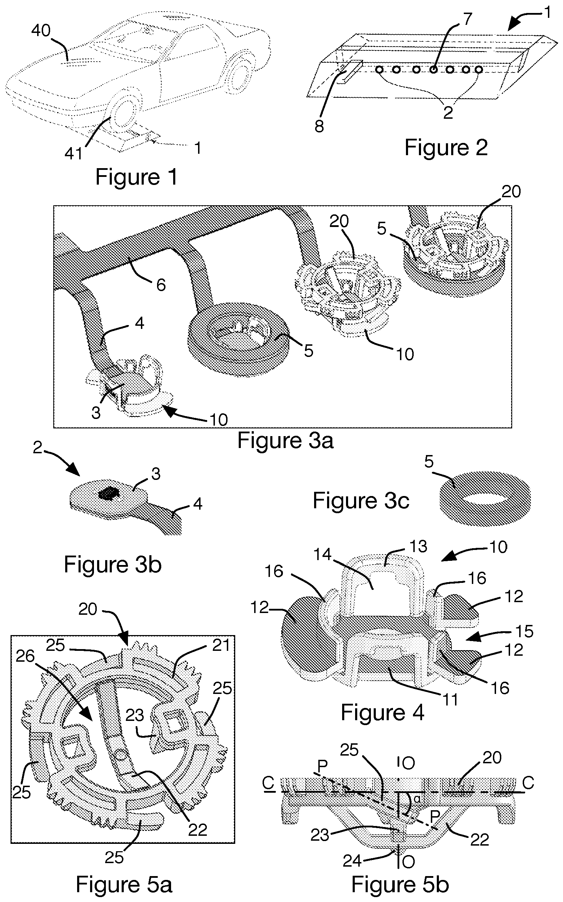

Les figures 1 et 2 illustrent un exemple d'un système 1 connu de mesure de l'épaisseur d'une couche de matériau caoutchouteux d'un pneumatique 41 d'un véhicule 40, tel que celui décrit dans le document FR3007517. Lorsque le véhicule 40 roule sur le boîtier 1, des capteurs permettent d'effectuer une ou plusieurs mesures, comme par exemple des mesures d'épaisseur de bande de roulement du pneumatique 41. Pour effectuer les mesures, le dispositif est préférentiellement placé à un emplacement facilitant le passage des véhicules 40. Le mode de fixation du boîtier est donc avantageusement conçu de façon à bien supporter les fortes contraintes liées aux passages de nombreux véhicules. Ces contraintes requièrent une fixation fiable et durable, tel que décrit dans les figures suivantes.

La plaque 1 est fixée au sol par un moyen classique, comme par exemple de la colle. La plaque comporte une pluralité de logements 7. Dans l'exemple illustré, les logements 7 sont alignés dans le sens longitudinal de la plaque, parallèlement aux bords et espacés de façon régulière. Chacun des logements 7 peut accueillir un système de fixation tel que décrit plus loin dans ce document.

### PRINCIPE DE FONCTIONNEMENT DU CAPTEUR MAGNETIQUE DE MESURE DE CARACTERISTIQUES DE PNEUMATIQUE

Le capteur de type connu permet de mesurer l'épaisseur d'une couche de matériau caoutchouteux d'un pneumatique, comme par exemple la bande de roulement. De façon classique, une telle couche comporte une face liée à une armature adjacente réalisée avec au moins un matériau de perméabilité magnétique supérieure à la perméabilité magnétique de l'air et une face libre en contact avec l'air. Le capteur est conçu pour mesurer la distance entre la face liée et la face libre de la couche de matériau caoutchouteux.

Le capteur comporte une source de champ magnétique statique et un élément sensible dont le signal de sortie est fonction du niveau du champ magnétique local, disposé de telle sorte que l'intensité du champ magnétique mesurée par l'élément sensible varie lorsque la distance à mesurer diminue.

Si on approche de ce dispositif une armature métallique, bonne conductrice de champ magnétique et mauvaise conductrice électrique, telle une nappe sommet d'un pneumatique constituée de renforts métalliques parallèles noyés dans deux couches de matériau caoutchouteux peu conducteur, les lignes de champ vont naturellement chercher à passer par cette armature métallique plutôt que dans l'air, car l'air a une reluctance supérieure à celle de l'armature métallique. On observe une localisation des lignes de champ magnétique à travers l'armature métallique. Il en résulte que dans la zone située entre la bobine et l'armature métallique, la densité de flux magnétique va augmenter. Le mode de fonctionnement du capteur utilise ce principe physique et est un mode reluctant donc lié à la perméabilité magnétique des différentes parties du circuit magnétique constitué par la source et l'objet dont on mesure la distance avec le capteur.

Les épaisseurs des bandes de roulement ont une épaisseur très faible à mesurer. Par conséquent, la mesure requiert une précision extrême.

Afin d'assurer une mesure précise et fiable, il est nécessaire que les différents éléments constituants la chaine de mesure soient parfaitement maintenus, si possible sans jeu ou avec un jeu le plus faible possible. Le moindre jeu entre les éléments du capteur et/ou entre les éléments du capteur et le boîtier pourrait affecter la qualité ou la fiabilité des mesures. Tel que décrit ci-après, les éléments sont fixés de telle sorte qu'il n'y ait un minimum de vibration, et/ou de déplacement des pièces du système.

### SYTEME DE FIXATION

Les figures 3a, 3b et 3c illustrent un exemple de réalisation d'un capteur magnétique 2 de type connu. A la figure 3a, le capteur est présenté à différents stades de son assemblage avec un système de fixation décrit en détails en relation avec les figures 5a à 7b.

**Tel** qu'illustré à la figure 3b, le capteur magnétique 2 comprend un circuit électronique 3 relié à un câblage multiple 6 par l'intermédiaire d'un câblage 4 individuel ou simple. Dans un boîtier 1 de mesure de caractéristiques de pneumatique comportant une pluralité de capteurs 2, chacun d'entre eux est relié à un câblage multiple 6 par un câblage simple 4. Le câblage multiple 6 relie une pluralité de capteurs 2 à un contrôleur 8, illustré à la figure 2. Le capteur comprend également un aimant 5 circonférentiel, tel qu'illustré à la figure 3c, dans lequel le circuit électronique peut être positionné.

Un système de fixation permet d'assembler les capteurs magnétiques 2 de façon optimale dans le boîtier 1. Ce système comprend un support 10 de capteur magnétique et une bague 20 de précontrainte. Le support 10 et la bague 20 sont décrits en détails en relation avec les figures 4 à 7b.

La figure 4 illustre un exemple de support 10 de capteur magnétique. Ce support permet de loger le circuit électronique 3 et de porter l'aimant 5 de façon à permettre l'intégration de ces éléments dans le boîtier 1.

Le support 10 comprend une plateforme 11 de profil sensiblement complémentaire à celui du circuit électronique 2. Cette plateforme 11 permet de loger le circuit électronique. Des rebords périphériques 16 entourent en partie la plateforme 11 afin de bien maintenir les bords du circuit électronique 3. Des bras radiaux 12 sont agencés en périphérie de la plateforme 11. Dans l'exemple de réalisation illustré aux figures, le support 10 est muni de trois bras radiaux 12. Les bras radiaux 12 disposent chacun d'une surface sensiblement plane, l'ensemble des surfaces étant sensiblement coplanaires, afin de former un socle prévu pour porter l'aimant 5 du capteur magnétique 2. Les rebords périphériques 16 sont par ailleurs conçus pour s'ajuster dans l'ouverture de l'aimant annulaire 5, permettant de bien centrer ce dernier sur le support et de minimiser les mouvements ou vibrations transversaux.

Des arches périphériques 13 sont agencées en périphérie de la plateforme 11. Dans l'exemple illustré, deux arches périphériques 13 sont agencées en opposition, de part et d'autres de la plateforme 11 entre les bras radiaux 12 et les rebords périphériques 16. Les arches périphériques 13 ont chacune une ouverture d'arche 14. Ces ouvertures d'arche 14 sont prévues pour coopérer avec la bague de précontrainte 20 décrite plus loin.

D'un côté des arches 13, deux des trois bras 12 sont de taille réduite pour former un passage 15 par lequel le câblage simple 4 peut traverser, pour atteindre le circuit électronique 3.

Les figures 5a et 5b illustrent un exemple de bague 20 de précontrainte. La bague de précontrainte 20 comprend un corps annulaire 21, bien visible à la figure 5a, pourvu d'une ouverture 26 sensiblement centrale, d'axe O-O. L'ouverture 26 de la bague de précontrainte 20 a un profil sensiblement circulaire, complémentaire avec le profil du support 10.

Dans l'ouverture 26, une poutre diamétrale 22, en forme de U, traverse la bague de précontrainte 20. La portion médiane de la poutre est décalée par rapport au corps 21 annulaire 21 de la bague et se trouve sous le corps lorsque ce dernier est en position d'assemblage dans le boîtier 1.

Un picot d'appui 24 est disposé sur cette portion médiane de la poutre diamétrale, à l'opposé du corps 21 annulaire. La poutre diamétrale 22 et le picot 24 sont prévus pour interfacer avec le module électronique et exercer un effort de contrainte sur ce dernier lorsque tous les éléments du système de fixation et le capteur magnétique sont assemblés. Dans cet exemple, le picot d'appui 24 est unique et a un profil en demi-sphère.

La bague de précontrainte 20 comprend au moins une poutre circonférentielle 25, agencée en périphérie du corps 20 annulaire. Dans l'exemple illustré, la bague de précontrainte 20 comprend quatre poutres circonférentielles 25, agencées sensiblement à 90° les unes des autres sur le pourtour extérieur du corps annulaire 21. Les poutres sont inclinées d'un angle α formé entre l'axe P-P de la poutre circonférentielle 25 et le plan C-C du corps annulaire 21. L'angle α est compris entre 5° et 45° et de préférence entre 15° et 25°. En variante, les poutres sont incurvées et forment un angle variable le long de leur profil. Les poutres sont conçues pour exercer un effort d'appui résiliant sur l'aimant 5 du capteur magnétique lorsque tous les éléments du système de fixation et le capteur magnétique sont assemblés.

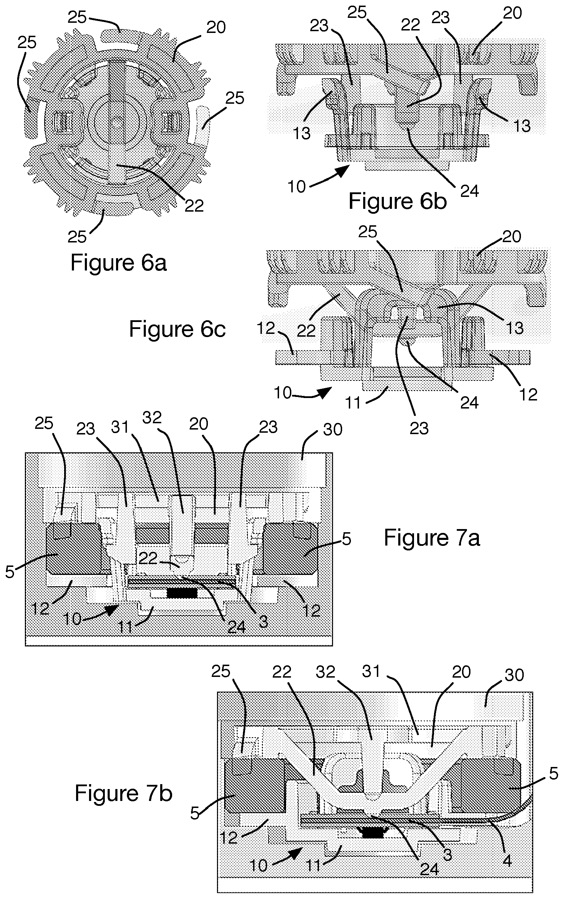

La bague de précontrainte 20 comprend au moins un doigt d'arrimage 23 s'étendant co-axialement à l'axe O-O de l'ouverture 26, dans la même direction que la poutre diamétrale 22. Le doigt d'arrimage permet de fixer la bague de précontrainte 20 au support 10, tel que décrit plus en détails en relation avec les figures 6a à 6c. Dans l'exemple de réalisation illustré, la bague de précontrainte 20 comprend deux doigts d'arrimage 23 disposés en opposition, de part et d'autre de la poutre diamétrale 22. Tel que montré à la figure 6b, les doigts forment des crochets allongés, adaptés pour coopérer avec les ouvertures d'arches 14 du support 10 de capteur magnétique. Les figures 6a et 6b illustrent la bague de précontrainte assemblée au support 10 à deux positions angulaires différentes. A la figure 6a, la vue est telle que la poutre diamétrale 22 est montrée de profil. A la figure 6b, avec un écart angulaire de 90° par rapport à la vue de la figure 6a, la poutre diamétrale est vue de face.

Les figures 7a et 7b illustrent l'assemblage complet du capteur magnétique 2, avec le système de fixation, l'ensemble étant inséré dans un boîtier 1 de mesure de caractéristiques de pneumatique. Les figures 7a et 7b correspondent aux vues des figures 6a et 6b, avec des positions angulaires similaires.

Dans cet état assemblé, les doigts d'arrimage 23 sont enclenchés dans les ouvertures d'arche 14, de telle sorte que la poutre diamétrale 22 exerce une force d'appui contre le circuit électronique 3 par l'entremise du doigt d'appui 24 et les poutres circonférentielles 25 exercent une force d'appui sur l'aimant 5. Le circuit électronique 3 et l'aimant 5 sont ainsi assemblés avec un assemblage serré, sous contrainte. Cette contrainte provient en outre de l'élasticité et de la résilience des matériaux de la bague de précontrainte 20 et du fait que lorsque les doigts d'arrimage 23 s'engagent dans les ouvertures d'arche 14, la poutre diamétrale 22 et les poutres circonférentielles 25 sont mises sous contrainte.

Les figures 7a et 7 b illustrent une portion d'un boîtier 1 dans laquelle un capteur magnétique est logé. Un disque 31 comprenant un doigt d'appui 32 est positionné sur la bague de précontrainte 20. Cet agencement permet d'assurer le maintien du système d'assemblage (support 10 de capteur magnétique et bague 20 de précontrainte) dans lequel le capteur magnétique 2 est inséré.

Dans cet exemple de réalisation, le doigt d'appui 32 s'insère dans un dégagement sur la poutre diamétrale situé du côté opposé au picot d'appui 24 tel qu'illustré à la figure 7b. Un couvercle 30 est disposé sur le disque 31 et appuie sur ce dernier, de sorte que le doigt d'appui 32 exerce une force contre la poutre diamétrale 22. L'assemble précontraint est ainsi mis en oeuvre sur l'ensemble des éléments. Le couvercle 30 permet également d'assurer l'étanchéité du capteur magnétique 2 et fourni une protection contre les agressions extérieures diverses.

### MATERIAUX

Le support de capteur magnétique 10 et la bague de précontrainte 20 sont avantageusement fabriqués en polymère thermoplastique, comme par exemple en PBT, préférentiellement chargé en fibres de verre. En variantes, on peut également utiliser des éléments réalisés en PET, PMMA, PC, ou en polyamide, de préférence chargé.

### Numéros de référence employés sur les figures

- 1: Boitier de mesure (par exemple de caractéristiques de pneumatique)
- 2: Dispositif électronique de mesure (par exemple un capteur magnétique de mesure de caractéristiques de pneumatique
- 3: Circuit électronique (PCB)
- 4: Câblage simple
- 5: Aimant annulaire
- 6: Câblage multiple
- 7: Logement de capteur
- 8: Contrôleur

- 10: Support de dispositif électronique
- 11: Plateau central
- 12: Bras radiaux
- 13: Arche périphérique
- 14: Ouverture d'arche
- 15: Passage du câblage simple
- 16: Rebord périphérique

- 20: Bague de précontrainte
- 21: Corps annulaire
- 22: Poutre diamétrale
- 23: Doigt d'arrimage
- 24: Picot d'appui
- 25: Poutre circonférentielle
- 26: Ouverture de bague de précontrainte

- 30: Couvercle
- 31: Disque
- 32: Doigt d'appui

- 40: Véhicule
- 41: Pneumatique

## Revendications

1. Système de fixation pour dispositif électronique (2) tel qu'un capteur magnétique comprenant un aimant (5) annulaire et un circuit électronique (3) de lecture d'un champ magnétique susceptible d'être généré par ledit aimant (5), pour fixation dans un boitier (1) de mesure, comprenant :
- un support (10) de dispositif électronique conçu pour loger un dispositif électronique de mesure (2) ;
- une bague (20) de précontrainte apte à coopérer avec ledit support (10) pour assemblage et comprenant une pluralité de poutres (22, 25) de précontrainte agencées pour appuyer sur ledit dispositif électronique (2) lorsque ladite bague est assemblée avec le support, ledit dispositif électronique (2) étant inséré dans ledit support (10), dans lequel la bague (20) de précontrainte comporte un corps annulaire (21) portant une pluralité de poutres périphériques (25) réparties circonférentiellement sur le pourtour dudit corps (21) annulaire, lesdites poutres périphériques (25) étant agencées pour appuyer contre ledit aimant annulaire (5) du capteur (2) magnétique de mesure, lorsque ce dernier est logé dans le support (10) et que la bague (20) est assemblée avec ledit support.

2. Système de fixation selon la revendication 1, dans lequel la bague (20) de précontrainte comporte une poutre diamétrale (22) agencée pour appuyer contre ledit circuit électronique (3) lorsque ce dernier est logé dans le support (10) et que la bague (20) est assemblée avec ledit support.

3. Système de fixation selon l'une des revendications 1 ou 2, dans lequel le support (10) comporte au moins une arche périphérique (13) pourvue d'une ouverture d'arche (14).

4. Système de fixation selon la revendication 3, dans lequel la bague (20) comporte au moins un doigt d'arrimage (23) apte à coopérer avec ladite ouverture (14) d'arche pour arrimer la bague (20) avec le support (10) avec une précontrainte des poutres (22, 25) en appui contre le capteur magnétique lorsque ce dernier est logé dans le support.

5. Système de fixation selon l'une quelconque des revendications précédentes, dans lequel les poutres (22, 25) sont déformables élastiquement.

6. Boîtier (1) de mesure de caractéristiques de pneumatique, comprenant :
(i) au moins un capteur (2) magnétique pourvu d'un aimant circonférentiel (5) et d'un circuit électronique (3) de lecture d'un champ magnétique susceptible d'être généré par ledit aimant;
(ii) au moins un système de fixation selon l'une des revendications 1 à 5 ;
(iii) au moins une cavité (7) pour loger un capteur (2) lorsque ce dernier est assemblé sous précontrainte dans un système de fixation ;
(iv) un couvercle de boitier (30), refermant la cavité (7).

7. Boîtier de mesure selon la revendication 6, comprenant par ailleurs au moins un disque (31) insérable dans le corps (21) de la bague (20), ledit disque portant un doigt d'appui (32), s'étendant perpendiculairement au plan du disque et adapté pour appuyer sur la poutre diamétrale (22) lorsque ledit couvercle (30) de boîtier est refermé.

## Patentansprüche

1. Befestigungssystem für eine elektronische Vorrichtung (2) wie etwa ein Magnetsensor, der einen ringförmigen Magneten (5) und einen elektronischen Schaltkreis (3) zum Lesen eines Magnetfelds umfasst, das von dem Magneten (5) erzeugt werden kann, zur Befestigung in einem Messgehäuse (1), umfassend:
- einen Halter (10) einer elektronischen Vorrichtung, der dafür ausgelegt ist, eine elektrische Messvorrichtung (2) aufzunehmen;
- einen Vorspannring (20), der geeignet ist, mit dem Halter (10) zum Zusammenbau zusammenzuwirken und eine Mehrzahl von Vorspannbalken (22, 25) umfasst, die angeordnet sind, auf die elektrische Vorrichtung (2) zu drücken, wenn der Ring mit dem Halter zusammengebaut ist, wobei die elektrische Vorrichtung (2) in den Halter (10) eingesetzt ist, wobei der Vorspannring (20) einen ringförmigen Körper (21) aufweist, der eine Mehrzahl von peripheren Balken (25) trägt, die in Umfangsrichtung auf dem Umfang des ringförmigen Körpers (21) verteilt sind, wobei die peripheren Balken (25) angeordnet sind, gegen den ringförmigen Magneten (5) des magnetischen Messsensors (2) zu drücken, wenn dieser im Halter (10) aufgenommen ist und der Ring (20) mit dem Halter zusammengebaut ist.

2. Befestigungssystem nach Anspruch 1, wobei der Vorspannring (20) einen Diametralbalken (22) aufweist, der angeordnet ist, gegen den elektronischen Schaltkreis (3) zu drücken, wenn dieser im Halter (10) aufgenommen ist und der Ring (20) mit dem Halter zusammengebaut ist.

3. Befestigungssystem nach einem der Ansprüche 1 oder 2, wobei der Halter (10) mindestens einen peripheren Bogen (13) aufweist, der mit einer Bogenöffnung (14) versehen ist.

4. Befestigungssystem nach Anspruch 3, wobei der Ring (20) wenigstens einen Kopplungsfinger (23) aufweist, der geeignet ist, mit der Bogenöffnung (14) zusammenzuwirken, um den Ring (20) mit dem Halter (10) mit einer Vorspannung der Balken (22, 25) in Anlage an den Magnetsensor zu verkoppeln, wenn letzterer im Halter aufgenommen ist.

5. Befestigungssystem nach einem der vorhergehenden Ansprüche, wobei die Balken (22, 25) elastisch verformbar sind.

6. Gehäuse (1) zur Messung von Eigenschaften eines Reifens, umfassend:
(i) wenigstens einen Magnetsensor (2), der mit einem umlaufenden Magneten (5) und einem elektronischen Schaltkreis (3) zum Lesen eines Magnetfelds versehen ist, das von dem Magneten erzeugt werden kann;
(ii) wenigstens ein Befestigungssystem nach einem der Ansprüche 1 bis 5;
(iii) wenigstens einen Hohlraum (7) zur Aufnahme eines Sensors (2), wenn dieser unter Vorspannung in einem Befestigungssystem eingebaut ist;
(iv) einen Gehäusedeckel (30), der den Hohlraum (7) verschließt.

7. Messgehäuse nach Anspruch 6, ferner umfassend wenigstens eine Scheibe (31), die in den Körper (21) des Rings (20) einführbar ist, wobei die Scheibe einen Drückfinger (32) trägt, der sich senkrecht zur Ebene der Scheibe erstreckt und geeignet ist, auf den Diametralbalken (22) zu drücken, wenn der Gehäusedeckel (30) verschlossen ist.

## Claims

1. Fastening system for an electronic device (2) such as a magnetic sensor comprising an annular magnet (5) and an electronic circuit (3) for reading a magnetic field able to be generated by said magnet (5), for fastening in a measurement housing (1), comprising:
- an electronic-device holder (10) designed to accommodate an electronic measurement device (2);
- a prestressing ring (20) that is able to cooperate with said holder (10) for assembly and comprises a plurality of prestressing beams (22, 25) designed to bear on said electronic device (2) when said ring is assembled together with the holder, said electronic device (2) being inserted into said holder (10), wherein the prestressing ring (20) has an annular body (21) bearing a plurality of peripheral beams (25) distributed circumferentially around the perimeter of said annular body (21), said peripheral beams (25) being designed to bear against said annular magnet (5) of the magnetic measurement sensor (2) when the latter is accommodated in the holder (10) and the ring (20) is assembled together with said holder.

2. Fastening system according to Claim 1, wherein the prestressing ring (20) has a diametrical beam (22) designed to bear against said electronic circuit (3) when the latter is accommodated in the holder (10) and the ring (20) is assembled together with said holder.

3. Fastening system according to either of Claims 1 and 2, wherein the holder (10) has at least one peripheral arch (13) provided with an arch opening (14).

4. Fastening system according to Claim 3, wherein the ring (20) has at least one securing finger (23) that is able to cooperate with said arch opening (14) in order to secure the ring (20) to the holder (10) with prestressing of the beams (22, 25) bearing against the magnetic sensor when the latter is accommodated in the holder.

5. Fastening system according to any one of the preceding claims, wherein the beams (22, 25) are elastically deformable.

6. Housing (1) for measurement of tyre characteristics, comprising:
(i) at least one magnetic sensor (2) provided with a circumferential magnet (5) and with an electronic circuit (3) for reading a magnetic field able to be generated by said magnet;
(ii) at least one fastening system according to one of Claims 1 to 5;
(iii) at least one cavity (7) for accommodating a sensor (2) when the latter is assembled under prestressing in a fastening system;
(iv) a housing cover (30) closing the cavity (7).

7. Measurement housing according to Claim 6, also comprising at least one disc (31) that is insertable into the body (21) of the ring (20), said disc bearing a bearing finger (32) that extends perpendicularly to the plane of the disc and is designed to bear on the diametrical beam (22) when said housing cover (30) is closed.
